(19)

Europäisches
Patentamt
European
Patent Office
Office européen
des brevets

(11) **EP 1 739 847 A2**

(12) **EUROPEAN PATENT APPLICATION**

(43) Date of publication:
**03.01.2007 Bulletin 2007/01**

(51) Int Cl.:
*H04B 1/56* [(2006.01)]

(21) Application number: **06013614.0**

(22) Date of filing: **30.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **01.07.2005 KR 20050059114
30.08.2005 KR 20050079946**

(71) Applicant: **Samsung Electronics Co., Ltd.
Suwon-si, Gyeonggi-Do (KR)**

(72) Inventors:
• **Yoon, Hyun-Su
Yongin-si
Gyenggi-do (KR)**

• **Na, Kweon
Kiheung-eub
Yongin-si
Gyeonggi-do (KR)**
• **An, Young-Jin
Kiheung-gu
Yongin-si
Gyeonggi-do (KR)**

(74) Representative: **Grünecker, Kinkeldey,
Stockmair & Schwanhäusser
Anwaltssozietät
Maximilianstrasse 58
80538 München (DE)**

(54) **Transmit-receive antenna switch in a TDD wireless communication system**

(57)     Provided is a transmit-receive antenna switch (TRAS) in a TDD wireless communication system In the TRAS, a circulator transmits a signal received from a PA to an antenna feed line and a signal received from the antenna feed line to a reflector. The reflector fully reflects the signal received from the circulator when a reflection operation is turned on in transmission mode, and transmits the signal received from the circulator to a wireless switch, such as, an RF switch when the reflection operation is turned off in reception mode. The RF switch transmits or blocks the signal received from the reflector to or from an LNA according to the transmission or reception mode.

FIG.3

**Description**

**PRIORITY**

This application claims priority under 35 U.S.C. § 119 to an application entitled "Apparatus for Transmit-Receive Antenna Switch in a TDD Wireless Communication System" filed in the Korean Intellectual Property Office on July 1, 2005 and assigned Serial No. 2005-59114 and an application entitled "Apparatus for Transmit-Receive Antenna Switch in a TDD Wireless Communication System" filed in the Korean Intellectual Property Office on August 30, 2005 and assigned Serial No. 2005-79946, the contents of which are incorporated herein by reference.

**BACKGROUND OF THE INVENTION**

1. Field of the Invention

The present invention relates generally to a Transmit-Receive Antenna Switch (TRAS) in a Time Division Duplex (TDD) wireless communication system, and in particular, to an apparatus for protecting a Low Noise Amplifier (LNA) at a receiver in transmission mode.

2. Description of the Related Art

Typically, a TRAS toggles between a high-power Radio Frequency (RF) transmit (Tx) signal and a low-power RF receive (Rx) signal in a TDD wireless communication system that divides a given frequency in time, for transmission and reception. The TRAS protects an LNA at a receiver by blocking transmit power introduced in transmission mode, and reducing noise introduced to a transmitter in reception mode.

In general, an RF switch or a circulator is used for the TRAS functionality.

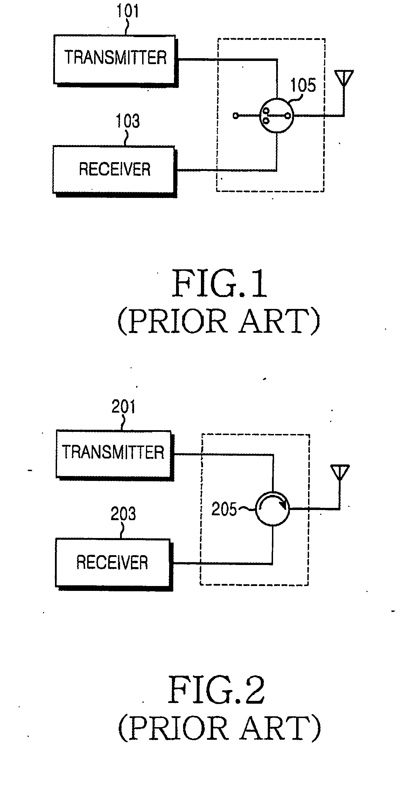

FIG. 1 illustrates a conventional RF switch used as a TRAS. Referring to FIG. 1, a Single Pole Double Throw (SPDT) switch 105 switches a Tx signal from a transmitter 101 to an antenna feed line in transmission mode, and switches an Rx signal from the antenna feed line to a receiver 103 in reception mode. The RF switch 105 toggles between a Tx path and an Rx path according to a TDD control signal. This configuration is used in a system having transmit power less than 1W.

FIG. 2 illustrates a conventional circulator used as a TRAS. Referring to FIG. 2, a circulator 205 provides a Tx signal from a transmitter 201 to an antenna feed line in transmission mode, and switches an Rx signal from the antenna feed line to a receiver 203 in reception mode. Transmission and reception are separated relying on the principle that a signal is transferred downstream with minimal signal attenuation and a great signal propagation loss is produced upstream. This configuration is used in a system having transmit power less than 8W.

While the above-described TRASs are applicable to a TDD system using low-power RF signals, it is not viable in a system using high-power RF signals at least 10W because of the power ratings and breakdown of parts together with unrealistic cost of circuit implementation. Especially when a TRAS is realized in the manner illustrated in FIG. 1, its cost is unrealistic (about $1500). Despite its capability of processing up to intermediate-power signals, the TRAS illustrated in FIG. 2 has the distinctive shortcoming where defects in the antenna feed line leads to the introduction of reflected transmit power into the LNA, causing permanent damage to the LNA.

**SUMMARY OF THE INVENTION**

An object of the present invention is to substantially solve at least the above problems and/or disadvantages and to provide at least the advantages below herein. Accordingly, an object of the present invention is to provide a TRAS for processing a high-power RF signal in a TDD wireless communication system.

Still another object of the present invention is to provide an apparatus for protecting an LNA at a receiver in transmission mode in a TDD wireless communication system.

A further object of the present invention is to provide an apparatus for completely reflecting a signal applied to a receiver in transmission mode in a TDD wireless communication system.

Still another object of the present invention is to provide an apparatus for minimizing power loss in a Tx path from a Power Amplifier (PA) to an antenna in a TDD wireless communication system.

Yet still another object of the present invention is to provide an apparatus for minimizing insertion loss in an Rx path from an antenna to an LNA in reception mode in a TDD wireless communication system.

Yet still a further object of the present invention is to provide an apparatus for increasing isolation between a Tx path and an Rx path in a TDD wireless communication system.

A still further object of the present invention is to provide an apparatus for protecting an LNA by coupling a relay switch at the front end of the LNA in a TDD wireless communication system.

Further yet another object of the present invention is to provide an apparatus for protecting an LNA regardless whether power is supplied to a protection circuit of the LNA in a TDD wireless communication system.

According to one aspect of the present invention, in a TRAS in a TDD wireless communication system, a circulator transmits a signal received from a PA to an antenna feed line and a signal received from the antenna feed line to a reflector. The reflector fully reflects the signal received from the circulator when a reflection operation is turned on in transmission mode, and transmits the signal received from the circulator to a wireless switch, such as an RF switch when the reflection operation is turned off in reception mode. The RF switch transmits or blocks the signal received from the reflector to or from an LNA according to the transmission or reception mode.

According to another aspect of the present invention, in a TRAS in a TDD wireless communication system, a circulator transmits a signal received from a PA to an antenna feed line and a signal received from the antenna feed line to a reflector. A transmission line is connected between a circulator and an LNA. A plurality of PIN diodes are connected to the transmission line at predetermined positions in a shunt structure. A controller controls bias to the plurality of PIN diodes according to transmission or reception mode.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates a conventional RF switch used as a TRAS;
FIG. 2 illustrates a conventional circulator used as a TRAS;
FIG. 3 is a block diagram schematically illustrating a TRAS in a TDD wireless communication system according to the present invention;
FIG. 4 is a detailed block diagram schematically illustrating a reflector that illustrated in FIG. 3 according to the present invention;
FIGs. 5A, 5B and 5C are equivalent circuit diagrams schematically illustrating a PIN diode for better understanding of the present invention;
FIG. 6 illustrates an example of the reflector illustrated in FIG. 3;
FIG. 7 illustrates a wireless switch, such as an RF switch illustrated in FIG. 3 according to the present invention; and
FIG. 8 is a block diagram schematically illustrating a TRAS in a TDD wireless communication system according to the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a TRAS for protecting an LNA in reception mode in a TDD wireless communication system using high power.

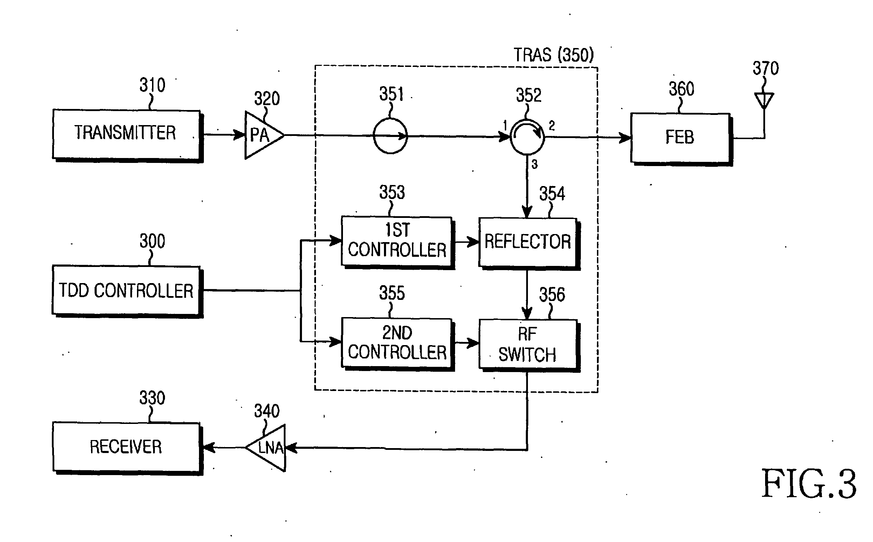

FIG. 3 is a block diagram schematically illustrating a TRAS in a TDD wireless communication system according to the present invention. Referring to FIG. 3, a TRAS 350 according to the present invention includes an isolator 351, a circulator 352, a first controller 353, a reflector 354, a second controller 355, and an RF switch 356.

In operation, a PA 320 amplifies the power of a Tx signal received from a transmitter 310. The isolator 351 is coupled to an output end of the PA 320, for protecting a termination circuit of the PA 320. That is, the isolator 351 terminates a signal reflected from an antenna feed line due to some defect in the antenna feed line. The isolator 351 may be incorporated into the PA 320. The circulator 352 transfers a signal received from the isolator 351 to a Front End Block (FEB) 360 and a signal received from the FEB 360 to the reflector 354 according to directionality specified by an arrow illustrated in FIG. 3.

The first controller 353 turns on/off reflection of the reflector 354 according to a TDD control signal received from a TDD controller 300. In transmission mode, the first controller 353 turns on the reflection of the reflector 354 and thus the reflector 354 completely reflects a signal received from the circulator 352. The reflected signal is terminated at the isolator 351 via third to first ports of the circulator 352.

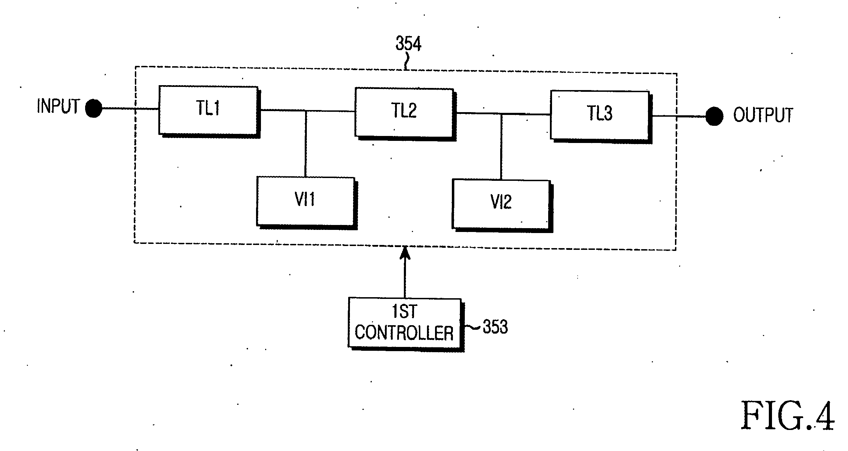

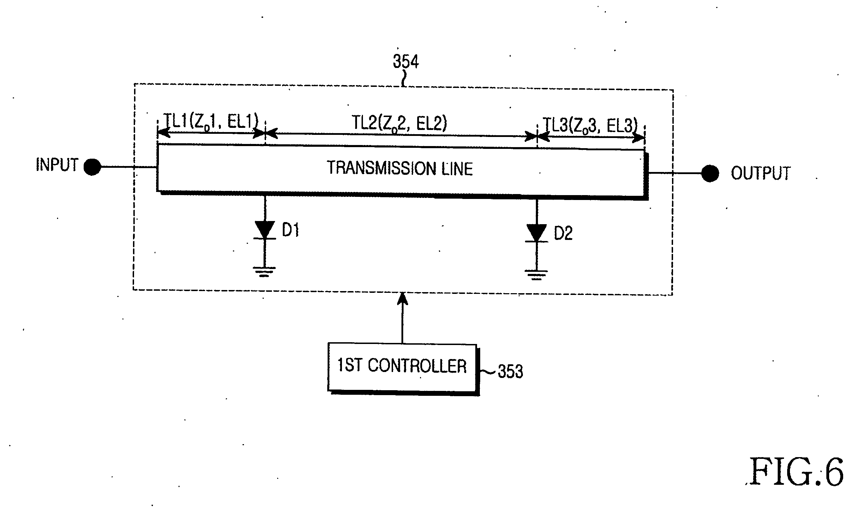

In reception mode, the first controller 353 turns off the reflection of the reflector 354. The reflector 354 then transfer a signal received from the circulator 352 to the RF switch 356, with a small signal loss. The reflector 354 includes a transmission line and a PIN diode, which will be described later in great detail with reference to FIGs. 4 and 6.

The second controller 355 controls switching of the RF switch 356 according to the TDD control signal received from the TDD controller 300. In the transmission mode, the second controller 355 turns off the RF switch 356, thus preventing transfer of a signal from the reflector 354 to the LNA 340. In the reception mode, the second controller 355 turns on the RF switch 356 so that the RF switch 356 switches the signal from the reflector 354 to the LNA 340. The RF switch 356 can be an SPDT switch or a Single Pole Single Throw (SPST) switch. In real implementation, the SPDT switch and the SPST switch can be realized using PIN diodes and transistors (e.g. GaAs Field Effect Transistor (FET)). The LNA 340 amplifies the signal received from the RF switch 356, with low noise and provides the amplified signal to a receiver 330. The operation of the TRAS having the above configuration will now be described in more detail. It is very important to prevent introduction of a high-power Tx signal to the LNA 340 in the transmission mode. The Tx signal output from the PA 320 is transferred in a path from the isolator 351 through the circulator 352 and the FEB 360 to an antenna 370.

The reflector 354 completely reflects leak power (RF signal) received from the circulator 352 under the control of the first controller 353, so as to block the Tx signal from being introduced into a path from the reflector 354 to the LNA 340. Meanwhile, the reflected signal is transferred through the third to first ports of the circulator 352 and then terminated by the isolator 351. Thus, the isolator 351 protects the PA 320 by absorbing the reflected Tx signal. In the transmission mode, the RF switch 356 is turned off under the control of the second controller 355, thereby preventing propagation of the signal from the reflector 354 to the LNA 340. In this way, the power is blocked from being introduced into the LNA 340 by use of the reflector 354 and the RF switch 356. Particularly, since the reflector 354 can attenuate the signal to a great extent, the LNA 340 can be protected by use of a low-power RF switch 356 despite high power in the transmission path according to the present invention.

In the reception mode, it is important to reduce signal loss between the antenna 370 and the LNA 340, which has direct effects on system Noise Figure (NF). A signal received through the antenna 370 is provided to the LNA 340 in a path from the FEB 360 through the circulator 352, the reflector 354 and the RF switch 356.

The reflector 354, whose reflection operation is turned off under the control of the first controller 353, transfers the signal received from the circulator 352 to the RF switch 356, with minimal loss. The RF switch 356 is turned on under the control of the second controller 355 and transfers the signal received from the reflector 354 to the LNA 340. In this way, the signal from the circulator 352 is provided to the LNA 340 without loss in the reception mode.

As described above, the TRAS 350 of the present invention isolates the Tx signal from the Rx path irrespective of whether the Tx path is normal or not in the transmission mode, and isolates the Rx signal from the Tx path in the reception mode, thereby minimizing path loss.

FIG. 4 is a detailed block diagram schematically illustrating the reflector 354 according to the present invention. Referring to FIG. 4, the reflector 354 is comprised of a transmission lines TL1, TL2 and TL3 as well as two parallel impedance converters VI1 and VI2. The impedance converters VI1 and VI2 are coupled to the transmission line at predetermined positions in a shunt like structure. A first transmission line TL1 covers from the start of the entire transmission line connected to the circulator 352 to the connection to the first impedance converter VI1, a second transmission line TL2 covers between the first impedance converter VI1 and the second impedance converter VI2, and a third transmission line TL3 covers from the connection to the second impedance converter VI2 to the end of the entire transmission line connected to the RF switch 356.

The reflector 354 of FIG. 3 having the above configuration is coupled to the RF switch 356 so that in the presence of impedance at the rear end, it can fully reflect the signal received from the circulator 352 (i.e. a reflection coefficient of 0dB) in the transmission mode and minimizes path loss caused by parasitic components of the impedance converters VI1 and VI2 by compensating for the parasitic components in the reception mode. The impedance converters are devices whose impedance varies with bias. For example, PIN diodes can be used as the impedance converters. A separate detailed description is now made of the transmission mode and the reception mode.

In the transmission mode, the second controller 355 turns off the RF switch 356 coupled to an output end of the reflector 354 according to a TDD control signal received from the TDD controller 300. Notably, the impedance of the RF switch 356 should be in an open state (a reflection coefficient of 0dB). Typically, when the RF switch 356 is off it is placed in an impedance state with reflection loss instead of the open state consequently, it can occur that part of the power of the input signal is consumed even in the off state and thus the high-power Tx signal damages the RF switch.

In the present invention, however, since the reflector 354 is so configured as to fully reflect in the transmission mode, the RF switch 356 and the LNA 340 are protected against high power. Because the characteristic impedance $Z_o$ of the first transmission line TL1, the characteristics impedance and electrical length of the second transmission line TL2, and the characteristic impedance $Z_o$ of the third transmission line TL3 affect the performance of the reflector 354, these parameters are set to empirical optimum values.

In the reception mode, the second controller 355 turns on the RF switch 356 coupled to the output end of the reflector 354 according to a TDD control signal received from the TDD controller 300. The RF switch 365, of which the input impedance is 50ohm, transfers an RF Rx signal to the LNA 340. Also, the first controller 353 turns off the reflection operation of the reflector 354 according to the TDD control signal from the TDD controller 300. Specifically, it turns off the reflection by controlling the bias of the two impedance converters VI1 and VI2 of the reflector 354. As the input impedance of the reflector 354 becomes 50ohm, the reflector 354 provides the RF Rx signal received form the circulator 352 to the RF switch 356 without signal loss.

The impedance converters VI1 and VI2 are turned on in the transmission mode and off in the reception mode under the control of the first controller 353. The impedance converters VI1 and VI2 each have a different resistance, inductance and capacitance in a different mode. When two impedance converters (PIN diodes) of the same characteristics are configured in parallel as illustrated in FIG. 4, their parasitic components (inductance and capacitance) are compensated for by the transmission line between the impedance converters. Thus, they form a near full reflection state in the transmission mode and minimize insertion loss in the reception mode.

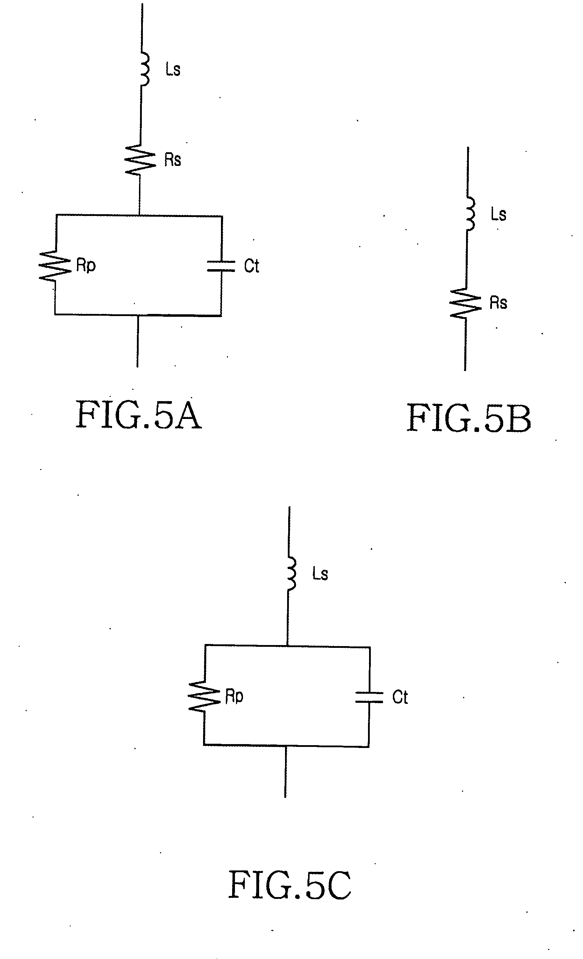

FIGs. 5A, 5B and 5C are equivalent circuit diagrams schematically illustrating a PIN diode for better understanding of the present invention.

Referring to FIG. 5A, a PIN diode has a resistance Rp varying with a bias voltage, a serial resistance Rs, and parasitic components Ls and Rs. When a forward bias is applied to the PIN diode, current flowing in the PIN diode increases, so that Rp approaches '0'. FIG. 5B is an equivalent circuit diagram of the PIN diode to which the forward bias is applied. On the other hand, if a reverse bias is applied to the PIN diode, the current becomes '0' in the PIN diode, maximizing Rp. FIG. 5C is an equivalent diagram of the PIN diode to which the reverse bias is applied. In this way, the parasitic components Ls and Ct appearing with application of the forward bias and the reverse bias can be eliminated by configuring two PIN diodes in parallel and interposing a transmission line of a predetermined length in between.

FIG. 6 illustrates an example of the reflector 354. Referring to FIG. 6, the reflector 354 includes two parallel PIN diodes D1 and D2 and a transmission line. A first transmission line TL1 covers from the start of the entire transmission line connected to the circulator 352 to a connection to the first PIN diode D1, a second transmission line TL2 covers between the first PIN diode D1 and the second PIN diode D2, and a third transmission line TL3, which covers from a connection to the second PIN diode D2 to the end of the entire transmission line connected to the RF switch 356.

In the transmission mode, the first controller 353 applies a forward bias to the PIN diodes D 1 and D2 which operate in the manner illustrated in FIG. 5B. The parasitic component Ls of the PIN diodes D 1 and D2, which degrades the reflection characteristics of the reflector 354, is compensated for by the second transmission line TL2. Theoretically, it is preferable that the electrical length (EL) of the second transmission line TL2 is $\lambda/4$.

In the reception mode, the first controller 353 applies a reverse bias to the PIN diodes D1 and D2 which operate in the manner illustrated in FIG. 5C. The parasitic components Ls and Ct of the PIN diodes D 1 and D2, which increase the insertion loss of the reflector 354, are compensated for by the second transmission line TL2. Thus, the reflector 354 with the PIN diodes is coupled to the RF switch 356, so that it offers ideal full reflection characteristics (a reflection coefficient of 0dB) at the third port of the circulator 352 in the transmission mode and minimizes path loss (or insertion loss) caused by the parasitic components, inductance and capacitance of the two parallel PIN diodes by compensating for the parasitic components in the reception mode.

The characteristics of the reflector 354 may be affected by the characteristics of the PIN diodes and the characteristic impedances $Z_o1$, $Z_o2$, and $Z_o3$ and electrical lengths EL1, EL2 and EL3 of the transmission lines TL1, TL2 and TL3, particularly the characteristics $Z_o2$ and EL 2 of the second transmission line TL2. Accordingly, optimization of TL2 rather than TL1 and TL3 is critical. In theory, it is preferable to set the characteristic impedances $Z_o1$, $Z_o2$, and $Z_o3$ to 50ohm and the electrical length EL2 to $\lambda/4$ to minimize insertion loss.

As stated before, the RF switch 356 can be a diode switch, a transistor (e.g. FET) switch, or the like. The diode switch can be used in three ways: parallel PIN diodes, serial PIN diodes, or both in combination.

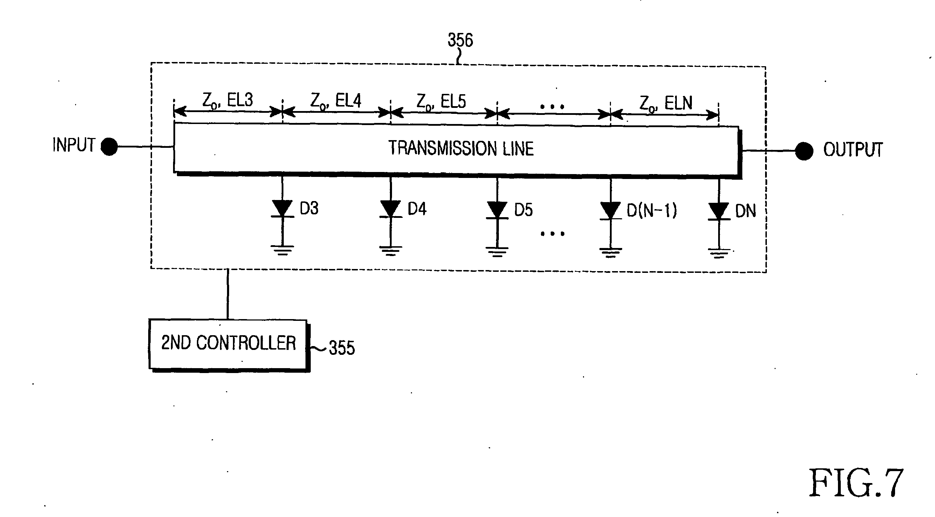

FIG. 7 illustrates the RF switch 356 according to the present invention. Referring to FIG. 7, the wireless switch, such as the RF switch 356 includes at least two PIN diodes D3 to DN in parallel to a transmission line. This configuration eliminates the parasitic components of the PIN diodes based on the forward and reverse bias characteristics of the PIN diodes and the electrical length between the PIN diodes. Therefore, isolation is ensured between the input and output in the transmission mode and insertion loss between the input and output is minimized in the reception mode.

In the transmission mode, the second controller 355 applies a forward bias to the PIN diodes D3 to DN which operate in the manner illustrated in FIG. 5B. The parasitic components of the PIN diodes, which degrade the isolation characteristics of the RF switch are compensated for by the transmission line between the PIN diodes.

In the reception mode, the second controller 355 applies a reverse bias to the PIN diodes D3 to DN which operate in the manner illustrated in FIG. 5C. The parasitic components Ls and Ct of the PIN diodes, which increase the insertion loss of the RF switch 356, are compensated for by the transmission line between the PIN diodes.

In theory, it is preferable to set the characteristic impedances of the respective transmission lines defined by the PIN diodes to 50ohm and the electrical length of the transmission lines to $\lambda/4$ to minimize insertion loss. Yet, the lengths of the transmission lines may be changed according to the number of used PIN diodes, the impedances of the transmission lines, and the input impedance of the LNA 340. That is, the parameters are set to optimum values by simulation.

Meanwhile, when both the reflector 354 and the RF switch 356 are configured with PIN diodes, they can be controlled by a single controller.

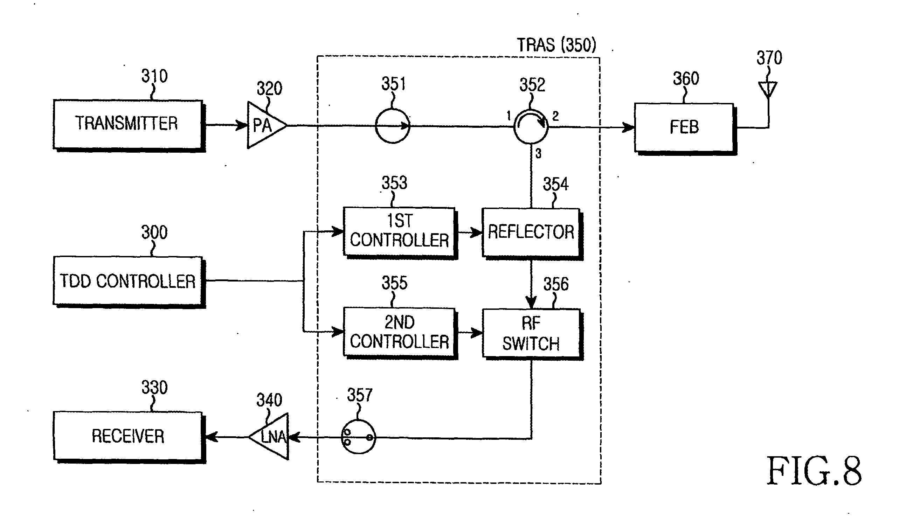

FIG. 8 is a block diagram of a TRAS in a TDD wireless communication system according to the present invention.

The TRAS is so configured as to protect the LNA even when power is not supplied to a reception board, specifically the protection circuit of the LNA due to board installation/uninstallation or some abnormality. Like reference numerals denote the same components and a description of the same components as provided in the first embodiment of the present invention is not provided herein.

Referring to FIG. 8, a TRAS 350 according to another embodiment of the present invention includes the isolator 351, the circulator 352, the first controller 353, the reflector 354, the second controller 355, the RF switch 356, and a relay switch 357.

The relay switch 357 is provided at the front end of the LNA 340. It is turned on when power is normally supplied to the reception board (or the receiver) and off when power is not supplied to the reception board. That is, even when power is not supplied to the reception board and as a result, the protection circuit of the receiver, i.e. the reflector 354 and the RF switch 356 are not activated, the introduction of power to the LNA 340 is prevented by turning off the relay switch 357.

When power is not supplied to the receiver, transmit power introduced into the LNA 340 is calculated as set forth in Equation (1) to be

$$2.1\text{dBm}=+47.8\text{dBm (PA output, 60W)}-0.3\text{dB (isolator loss)}-20\text{dB (circulator isolation)}-0.4\text{dB (SPDT loss)}-25\text{dB (relay switch isolation)}. \quad \ldots(1)$$

For another example, when power is not supplied to the receiver, the antenna is opened, and thus transmit power is fully reflected, reflected power introduced into the LNA 340 is calculated as set forth in Equation (2) to be

$$19.1\text{dBm}=+47.8\text{dBm (PA output, 60W)}-0.3\text{dB (isolator loss)}-0.3\text{dB (circulator loss)}-0.9\text{dB (filter insertion loss)}-0.6\text{dB (directional coupler loss)}-0.9\text{dB (filter insertion loss)}-0.3\text{dB (circulator loss)}-0.4\text{dB (SPDT loss)}-25\text{dB (relay switch isolation)}\ldots(2)$$

In case of a model ATF54143 LNA sold by Agilent, while maximum input power rating is 13dBm when power is supplied, an LNA is not damaged even with respect to 19.1dBm if power is not supplied to the LNA. In this way, the LNA is double-protected by use of the relay switch operating in conjunction with power supply to the board in the second embodiment of the present invention.

As described above, the present invention advantageously protects an LNA in transmission mode by supporting high isolation between a Tx path and an Rx path in a TDD wireless communication system. Also, the isolation between the two paths by use of a low-power RF switch reduces the manufacture cost of a TRAS and increases system space utilization. Furthermore, the LNA can be protected even when power is not supplied to a receiver and thus a protection circuit of the receiver is inoperative. In application to an RF module of a High speed Portable Internet (HPI) system under active development, technological problems encountered with in TDD operation of a high-power signal can be easily solved.

While the invention has been shown and described with reference to certain preferred embodiments thereof, it will be understood by those skilled in the art that various changes in form and details may be made therein without departing from the spirit and scope of the invention as defined by the appended claims.

## Claims

1. A transmit-receive antenna switch (TRAS) in a time division duplex (TDD) wireless communication system, comprising:

   a circulator for transmitting a signal received from a power amplifier (PA) to an antenna feed line and a signal received from the antenna feed line to a reflector;
   the reflector for reflecting the signal received from the circulator when a reflection operation is turned on in transmission mode, and transmitting the signal received from the circulator to a radio frequency (RF) switch when the reflection operation is turned off in reception mode; and

the RF switch for transmitting or blocking the signal received from the reflector to a low noise amplifier (LNA) according to the transmission or reception mode.

2.  The TRAS of claim 1, wherein the reflector comprises:

    a transmission line connected between the circulator and the RF switch; and
    two PIN diodes connected to the transmission line at predetermined positions in a shunt like structure.

3.  The TRAS of claim 2, wherein the electrical length between the two PIN diodes is $\lambda/4$.

4.  The TRAS of claim 2, wherein the characteristic impedance of the transmission line is 50ohm.

5.  The TRAS of claim 1, wherein the RF switch is one of a single pole double throw (SPDT) switch and a single pole single throw (SPST) switch.

6.  The TRAS of claim 1, wherein the RF switch is configured using one of a PIN diode and a transistor.

7.  The TRAS of claim 1, wherein the RF switch comprises:

    a transmission line connected between the reflector and the LNA; and
    at least two PIN diodes connected to the transmission line at predetermined positions in a shunt like structure.

8.  The TRAS of claim 7, wherein the electrical length between the at least two PIN diodes is $\lambda/4$.

9.  The TRAS of claim 1, further comprising an isolator for terminating a signal reflected from the reflector.

10. The TRAS of claim 9, wherein the isolator is included in the PA.

11. The TRAS of claim 1, further comprising a controller for turning on or off the reflection operation of the reflector according to a TDD control signal.

12. The TRAS of claim 1, further comprising a controller for controlling switching of the RF switching according to a TDD control signal.

13. The TRAS of claim 1, further comprising a controller for controlling the reflection operation of the reflector and the switching operation of the RF switch according to a TDD control signal.

14. The TRAS of claim 1, further comprising a relay switch provided at a front end of the LNA, for switching off and blocking power from being introduced into the LNA, when power is not supplied to a receiver.

15. A transmit-receive antenna switch (TRAS) in a time division duplex (TDD) wireless communication system, comprising:

    a circulator for transmitting a signal received from a power amplifier (PA) to an antenna feed line and a signal received from the antenna feed line to a reflector;
    a transmission line connected between a circulator and a low noise amplifier (LNA);
    a plurality of PIN diodes connected to the transmission line at predetermined positions in a shunt like structure; and
    a controller for controlling bias to the plurality of PIN diodes according to transmission or reception mode.

16. The TRAS of claim 15, wherein the electrical length between the plurality of PIN diodes is $\lambda/4$.

17. The TRAS of claim 15, wherein the characteristic impedance of the transmission line is 50ohm.

18. The TRAS of claim 15, further comprising an isolator for terminating a signal reflected from the transmission line.

19. The TRAS of claim 18, wherein the isolator is included in the PA.

20. The TRAS of claim 15, wherein the transmission line fully reflects a signal received from the circulator in the transmission mode and transmits the signal received from the circulator to the LNA in the reception mode.

21. The TRAS of claim 15, further comprising a relay switch provided at a front end of the LNA, for switching off and blocking power from being introduced into the LNA, when power is not supplied to a receiver.

22. A transmit-receive antenna switch (TRAS) in a time division duplex (TDD) wireless communication system, comprising:

a circulator for transferring a transmitting signal to an antenna feed line and a signal received via the antenna to a reflector;
the reflector for reflecting the signal received from the circulator when a reflection operation is turned on in transmission mode, and transferring the signal from the circulator to a switch when the reflection operation is turned off in reception mode; and
the switch for transferring or blocking the signal from the reflector to a low noise amplifier (LNA) according to the transmission or reception mode.

23. The TRAS of claim 22, further comprising an isolator for terminating a signal reflected from the reflector.

24. A transmit-receive antenna switch in a time division duplex wireless communication system, comprising:

a circulator for transmitting a signal from a power amplifier to an antenna and a signal received via the antenna to a reflector;
a transmission line connected between a circulator and a low noise amplifier;
a plurality of diodes connected to the transmission line at predetermined positions in a shunt like structure; and
a controller for controlling bias to the plurality of diodes according to transmission or reception mode.

101

TRANSMITTER

105

103

RECEIVER

# FIG.1
## (PRIOR ART)

201

TRANSMITTER

205

203

RECEIVER

# FIG.2
## (PRIOR ART)

EP 1 739 847 A2

TRAS (350)

TRANSMITTER — 310

320 PA

351

352

370

FEB — 360

353
1ST CONTROLLER

354
REFLECTOR

300
TDD CONTROLLER

355
2ND CONTROLLER

356
RF SWITCH

330
RECEIVER

340
LNA

FIG.3

354

INPUT ●——————[ TL1 ]——————[ TL2 ]——————[ TL3 ]——● OUTPUT

[ VI1 ]          [ VI2 ]

┌─────────────────┐
│      1ST        │
│   CONTROLLER    │~353
└─────────────────┘

FIG.4

FIG.5A

FIG.5B

FIG.5C

FIG.6

EP 1 739 847 A2

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200559114

- KR 200579946